# FASCICULE DE BREVET EUROPEEN

(11) **EP 1 445 508 B1**
(45) Date de publication et mention de la délivrance du brevet: **28.12.2005**
(21) Numéro de dépôt: 04290136.3
(22) Date de dépôt: 20.01.2004
(51) Int. Cl.: F16D 65/21, B60T 13/74, F16D 65/56

(54) **Frein électromécanique à dispositif de parc**
Elektromagnetische Bremse mit einer Parkbremse
Electromagnetic brake comprising a parking brake device

(30) Priorité: 07.02.2003 FR 0301456
(43) Date de publication de la demande: 11.08.2004
(73) Titulaire: MESSIER-BUGATTI, 78140 Velizy Villacoublay (FR)
(72) Inventeur: Guaraldo, Denis, 78140 Velizy (FR)
(74) Mandataire: Jaunez, Xavier

(56) Documents cités:
- FR-A- 2 819 469
- FR-A- 2 824 967
- US-A- 4 809 824
- US-B1- 6 189 661

## Description

L'invention concerne un frein électromagnétique pour véhicules à roues, notamment pour aéronefs.

### ARRIERE-PLAN DE L'INVENTION

On connaît des freins électromagnétiques comportant une pile de disques dont une partie (rotor) est solidaire en rotation de la roue et une autre partie (stator) est fixe en rotation, ainsi qu'un ou plusieurs actionneurs électromécaniques ayant chacun un poussoir pour appliquer de façon commandée une pression sur la pile de disques.

On pourra par exemple se référer aux documents FR-A-2 824 967, US-A-6 189 661 et US-A-4 809 824. Le document FR-A-2 819 469 divulgue le préambule de la revendication 1.

Un tel frein est en général équipé d'un dispositif de parc agencé pour maintenir une pression sur les disques au moins lorsque le frein n'est pas alimenté en courant électrique. Le dispositif de parc sert à immobiliser le véhicule lorsque celui-ci est à l'arrêt.

On connaît des dispositifs de parc pour frein électromécanique qui comprennent un moyen commandé de blocage positif d'au moins un des actionneurs équipant le frein de sorte que le poussoir de celui-ci soit immobilisé dans une position pressée contre la pile de disques.

Ces dispositifs de parc sont néanmoins peu satisfaisants. En effet, après un freinage intense, les parties constitutives du frein (pile de disques, structure du frein et actionneurs) qui ont été soumises à un important dégagement de chaleur sont dans un état dilaté. L'actionnement du moyen de blocage du dispositif de parc peu après le freinage intense, induit ainsi un blocage du poussoir alors que le frein est dans un état dilaté.

Or, le coefficient de dilatation des disques est plus faible que celui des parties métalliques du frein et de la roue. La structure du frein et les poussoirs bloqués formant une pince de la pile de disques, cette dernière se trouve alors progressivement comprimée lors du refroidissement.

Cette compression risque d'endommager les disques, et de bloquer fortement le poussoir de sorte que son déblocage s'avère difficile, voire impossible.

Pour éliminer cet inconvénient, on a songé à modifier le dispositif de parc pour le munir d'un organe de glissement qui permet de limiter l'effort de pression du poussoir sur la pile de disques à une valeur prédéterminée, de sorte qu'il est possible de provoquer sans risque le blocage du poussoir alors que le frein est encore dans un état dilaté, le supplément d'effort sur la pile de disques généré par le refroidissement du frein étant alors absorbé par l'organe de glissement.

On a également proposé d'utiliser un moyen élastique pour maintenir un effort de parc malgré les dilatations thermiques du frein, par exemple des rondelles Belleville qui sont compressées sous l'effet du moteur une fois que le poussoir est venu au contact des disques. La compression est maintenue du fait de l'irréversibilité de la liaison entre le moteur et le poussoir.

Mais, en cas d'augmentation de la température extérieure, (par exemple passage de la nuit au jour pour un avion stationné sur un aéroport en zone désertique), le frein se dilate à nouveau, la dilatation plus rapide des parties métalliques du frein et de la roue provoquant une diminution de l'effort de pression, ce qui n'est pas souhaitable dans la mesure où cet effort pourrait devenir insuffisant pour maintenir le véhicule immobilisé sur une pente.

### OBJET DE L'INVENTION

L'invention vise à proposer un frein électromagnétique ne présentant pas les inconvénients précités.

### BREVE DESCRIPTION DE L'INVENTION

Dans un frein électromécanique selon l'invention, le dispositif de parc comprend un organe élastique et un sélecteur qui est mobile entre une première position dans laquelle l'organe élastique est mécaniquement découplé du poussoir et est maintenu dans un état élastiquement déformé pour former une réserve d'énergie potentielle, et une deuxième position dans laquelle l'organe élastique est mécaniquement couplé au poussoir de façon que le poussoir exerce une pression contre la pile de disques sous l'action de l'organe élastique.

L'organe élastique forme un accumulateur d'énergie potentielle élastique et joue un rôle similaire à celui d'un accumulateur hydraulique dans les freins hydrauliques classiques.

En effet, dans un frein hydraulique, l'accumulateur hydraulique est, en mode normal, hydrauliquement isolé des pistons, et est maintenu gonflé.

De la même façon, en mode normal, lorsque le sélecteur est dans la première position, l'organe élastique est mécaniquement découplé du poussoir et est maintenu dans un état déformé.

Dans un frein hydraulique, en mode de parc, l'accumulateur hydraulique est hydrauliquement relié aux pistons de sorte que le fluide sous pression contenu dans l'accumulateur exerce sur les pistons hydrauliques une action hydraulique qui presse lesdits pistons contre la pile de disques.

De même, en mode de parc, lorsque le sélecteur est dans la deuxième position, l'organe élastique est mécaniquement relié au poussoir pour exercer sur celui-ci une action mécanique qui le presse contre la pile de disques.

Selon un mode préféré de réalisation de l'invention, l'organe élastique est un ressort spiral.

De préférence, ledit ressort spiral a une extrémité fixe et une extrémité solidaire d'un moyeu tournant coaxialement à un arbre de sortie du dispositif de parc.

Selon un premier mode de réalisation de l'invention, le sélecteur comprend alors un plateau mobile en rotation avec le moyeu et déplaçable axialement entre la première position dans laquelle des éléments d'accouplement du plateau coopèrent avec des éléments d'accouplement homologues fixes, et la deuxième position dans laquelle des éléments d'accouplement du plateau coopèrent avec des éléments d'accouplement homologues portés par l'arbre de sortie.

Avantageusement alors, le plateau est apte à être placé dans une position axiale intermédiaire dans laquelle les éléments d'accouplement portés par le plateau sont tous deux en prise avec les éléments d'accouplement homologues respectifs.

Selon un deuxième mode de réalisation de l'actionneur, le sélecteur comprend un premier plateau qui est déplaçable axialement entre une position de couplage dans laquelle des éléments d'accouplement du premier plateau coopèrent avec des éléments d'accouplement homologues portés par le moyeu et une position de désaccouplage dans laquelle lesdits éléments d'accouplement sont dégagés, ledit sélecteur comprenant en outre un second plateau solidaire en rotation du moyeu et déplaçable entre une position de couplage dans laquelle des éléments d'accouplement du second plateau coopèrent avec des éléments d'accouplement portés par l'arbre de sortie, et une position de désaccouplage dans laquelle lesdits éléments d'accouplement sont dégagés.

De préférence, au moins l'un des couples d'éléments d'accouplement est du type à glissement.

Selon un aspect particulier de l'invention, le dispositif de parc est un module unitaire logé dans un boîtier rapporté de façon détachable sur l'actionneur.

### BREVE DESCRIPTION DES DESSINS

L'invention sera mieux comprise à la lumière de la description qui suit de divers modes de réalisation, en référence aux figures des dessins annexés parmi lesquelles :
- la figure 1 est une vue en coupe d'un frein électromécanique selon l'invention ;
- la figure 2 est une vue en coupe schématique d'un des actionneurs du frein de la figure 1 ;
- la figure 3 est une vue en coupe d'un premier dispositif de parc équipant l'actionneur illustré à la figure 2, selon un premier mode de réalisation de l'invention ;
- la figure 4 est une vue en coupe d'un deuxième dispositif de parc équipant l'actionneur illustré à la figure 2, selon un deuxième mode de réalisation de l'invention.

### DESCRIPTION DETAILLEE DE L'INVENTION

L'invention est ici décrite en relation avec un frein électromécanique d'aéronef, mais l'invention pourra s'appliquer à tout autre type de véhicule à roues.

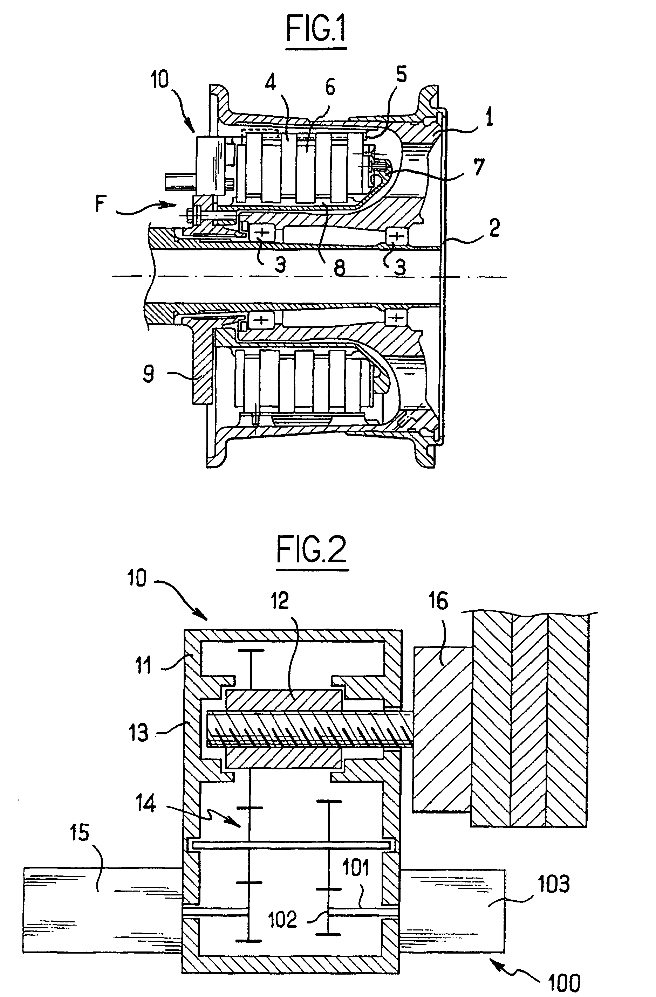

En référence à la figure 1, et de façon connue en soi, une roue d'aéronef 1 est montée en rotation sur un essieu 2 par l'intermédiaire de roulements 3. La roue 1 est équipée d'un frein F comprenant une pile de disques composée de rotors 4 qui sont mobiles en rotation avec la roue 1 grâce à un clavetage périphérique 5, et de stators 6 qui sont disposés en alternance avec les rotors 4, et qui sont liés en rotation à un tube de torsion 7 grâce à un clavetage intérieur 8. Le tube de torsion 7 est vissé à une couronne 9 qui est enfilée sur l'essieu 2 et arrêtée en rotation vis à vis de celui-ci de sorte que les stators 6 sont immobiles en rotation.

La couronne 9 porte des actionneurs électromécaniques 10 agencés circonférentiellement, dont un seul est représenté ici.

En référence à la figure 2, les actionneurs 10 comportent un boîtier 11 qui est rapporté sur la couronne 9 du frein F. Un écrou 12 est monté à rotation dans le boîtier 11 et coopère avec une vis 13 arrêtée en rotation vis à vis du boîtier 11 par un dispositif anti-rotation non représenté ici, de sorte qu'une rotation de l'écrou 12 provoque un déplacement axial de la vis 13.

Le boîtier 11 comporte un ensemble réducteur 14 qui réalise une liaison cinématique entre l'écrou 12 et un moteur électrique 15, ici rapporté de manière détachable sur le boîtier 11. La vis 13 est terminée par un poussoir 16 qui coopère avec la pile de disques pour exercer une pression sur celle-ci en réponse à un couple imposé par le moteur électrique 15.

Un dispositif de parc 100, ici conçu comme un module unitaire, est rapporté de manière détachable sur le boîtier 11. Le dispositif de parc 100 comporte un boîtier 103 dans lequel un arbre de sortie 101 est monté à rotation. L'arbre de sortie 101 est muni d'un pignon 102 apte à coopérer avec l'ensemble réducteur 14 de l'actionneur.

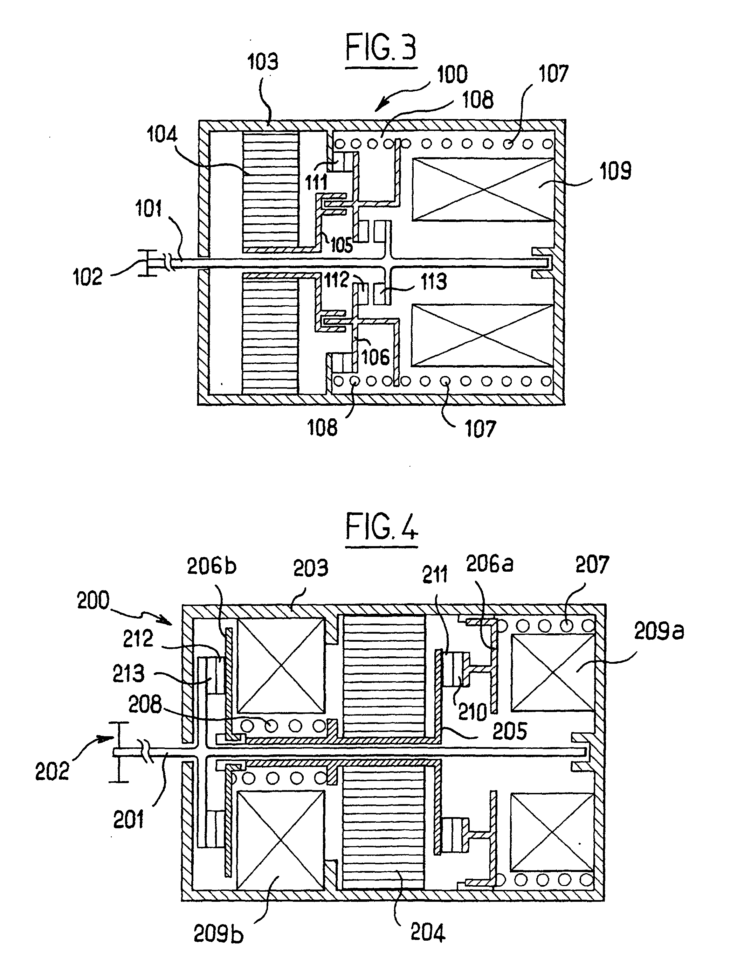

Selon un premier mode de réalisation illustré à la figure 3, un ressort spiral 104 est disposé dans le boîtier 103 de sorte qu'une extrémité extérieure du ressort spiral 104 est fixée au boîtier 103, et une extrémité intérieure dudit ressort spiral est solidaire d'un moyeu 105 monté à rotation coaxialement à l'arbre de sortie 101.

Le moyeu 105 porte un plateau 106 qui est solidaire en rotation du moyeu 105 mais est déplaçable axialement vis à vis de ce dernier sous l'action de deux ressorts antagonistes 107,108 et d'un électroaimant 109.

Le plateau 106 est mobile entre deux positions axiales extrêmes, dans lesquelles le plateau est couplé en rotation soit au boîtier 103, soit à l'arbre de sortie 101.

Pour ce faire, le plateau 106 porte sur l'une de ses faces des éléments d'accouplement 110 destinés à coopérer, lorsque le plateau 106 est dans la première position axiale (celle qui est illustrée sur la figure), avec des éléments d'accouplement homologues 111 montés fixes sur le boîtier 103.

Le plateau 106 porte sur l'autre de ses faces des éléments d'accouplement 112 destinés à coopérer, lorsque le plateau 106 est dans une deuxième position axiale, avec des éléments d'accouplement homologues 112 solidaires en rotation de l'arbre de sortie 101.

Lorsque le plateau 106 est dans la première position axiale, la coopération des éléments d'accouplement 110,111 a pour effet de bloquer le plateau 106 et donc le moyeu 105 en rotation, de sorte que le ressort spiral 104 est immobilisé et maintenu dans un état déformé.

Toujours dans ladite première position axiale, les éléments d'accouplement 112,113 sont disjoints de sorte que l'arbre de sortie 101 est libre de tourner sans subir l'influence du ressort spiral 104.

Lorsque le plateau 106 est dans la deuxième position axiale, la coopération des éléments d'accouplement 112, 113 a pour effet de lier en rotation le moyeu 105 à l'arbre de sortie 101, de sorte que l'arbre de sortie 101 est soumis à l'action du ressort spiral 104.

Le plateau est également susceptible d'être placé dans une position intermédiaire entre les positions axiales extrêmes qui est définie par l'équilibre des forces exercées par les ressorts antagonistes 107,108. Dans cette position intermédiaire, les éléments d'accouplement 110,111 d'une part et 112,113 d'autre part sont en prise, de sorte que l'arbre de sortie 101 est bloqué en rotation.

L'électroaimant 109 permet de déplacer le plateau 106 à l'encontre des ressorts 107,108. Partant d'une des positions axiales extrêmes, une impulsion nominale de courant permet de déplacer le plateau 106 dans l'autre des positions extrêmes, tandis qu'une impulsion faible, inférieure à l'impulsion nominale, permet de déplacer le plateau vers la position intermédiaire.

La position intermédiaire est une position d'équilibre stable, tandis que les positions axiales extrêmes sont rendues stables par l'utilisation d'un électroaimant 109 de type bistable qui permet de maintenir indéfiniment le plateau dans la position axiale extrême où il se trouve en l'absence d'impulsion.

Le fonctionnement du dispositif de parc 100 est le suivant.

Le plateau 106 est placé dans la première position axiale extrême lorsque l'actionneur est en mode de fonctionnement normal, c'est-à-dire lorsque le véhicule est activé et que le moteur électrique 15 est alimenté et assure le freinage normal du véhicule.

Dans cette position, l'arbre de sortie 101 est libre de tourner et n'oppose donc aucune résistance à la rotation de l'arbre de sortie du moteur 15. Le dispositif de parc est alors «transparent» pour la chaîne cinématique de l'actionneur.

Lorsque le véhicule doit être immobilisé en vue de son parking, on commande le moteur électrique 15 de façon à presser le poussoir 16 contre la pile de disques avec un effort prédéterminé, puis on envoie une impulsion nominale à l'électroaimant 109 pour déplacer le plateau 106 dans la deuxième position axiale extrême.

Le ressort spiral 104 est alors en prise avec l'arbre de sortie, qui est lui-même en prise avec le réducteur 14. La liaison entre l'écrou 12 et la vis 13 étant réversible, le poussoir 16 est libre de se déplacer axialement sous l'effet des dilatations thermiques, à l'encontre du ressort spiral 104 dont l'action permet de maintenir un effort de pression du poussoir 16 sur la pile de disques.

L'effort de pression résultant de l'action du ressort spiral 104 sur le poussoir 16 est déterminé d'une part par le couple de précontrainte du ressort spiral 104, et d'autre part par la raideur de celui-ci.

On aura intérêt à choisir une raideur du ressort spiral 104 assez faible, ce qui permet de limiter les variations de l'effort de pression en réponse à un déplacement du poussoir 16 sous l'effet des dilatations thermiques.

Quant au couple de précontrainte du ressort spiral, il peut être soit fixé une fois pour toutes en usine, soit modifié à volonté grâce au moteur électrique.

Pour cela, on met en prise le moteur électrique 15 avec le ressort spiral 104en déplaçant le plateau 106 dans la deuxième position axiale alors que le poussoir 16 n'est pas au contact de la pile de disques, et on laisse le ressort spiral 104 se dérouler (en étant ou non retenu par le moteur électrique 15), puis on provoque son enroulement d'un nombre de tours déterminé, correspondant au couple de précontrainte souhaité, au moyen du moteur électrique 15.

On peut également effectuer ce réglage en mesurant tout d'abord l'intensité du courant d'alimentation du moteur électrique 15 nécessaire pour que celui-ci empêche la détente du ressort spiral 104. Ce courant est une estimation du couple de précontrainte du ressort spiral 104. En faisant alors tourner le moteur électrique 15 dans un sens ou dans l'autre, on modifie la déformation du ressort spiral 104 jusqu'à obtenir le couple de précontrainte souhaité.

Une fois le réglage effectué, on déplace alors le plateau 106 vers la première position axiale, de sorte que le ressort spiral 104 soit immobilisé dans l'état déformé correspondant au couple de précontrainte souhaité.

Selon un aspect avantageux de l'invention, en plaçant le plateau 106 dans la position intermédiaire, on bloque l'arbre de sortie 101, ce qui bloque toute la chaîne cinématique de l'actionneur 10, et empêche ainsi l'action du moteur 15 sur le poussoir 16.

Le blocage de l'arbre de sortie 101 obtenu lorsque le plateau 106 est en position intermédiaire constitue une sécurité contre les manoeuvres intempestives non désirées du moteur électrique 15, par exemple en cas de maintenance sur le frein, ou pendant la phase d'impact à l'atterrissage d'un aéronef lors de laquelle on veut éviter tout blocage de la roue associée.

Selon un autre aspect avantageux de l'invention, le ressort spiral 104 peut être utilisé pour fournir un freinage de secours, en cas de défaillance totale du moteur électrique 15. Il suffit alors d'actionner l'électroaimant 109 pour déplacer le plateau 106 dans la deuxième position axiale extrême, de sorte que le ressort spiral 104 provoque par son déroulement le rattrapage de jeu entre le poussoir 16 et la pile de disques, puis impose un effort de pression du poussoir 16 sur la pile de disques. L'impulsion nécessaire pour actionner l'électroaimant 109 pourra avantageusement être fournie par une batterie, ce qui permet de freiner le véhicule même en cas de défaillance totale des circuits d'alimentation électrique de celui-ci.

Le plateau 106 forme ainsi un sélecteur permettant de placer le dispositif de parc 100 dans l'un ou l'autre des modes de fonctionnement précités, par simple déplacement axial sous l'effet des ressorts 107,108 et de l'électroaimant 109.

Les éléments d'accouplement 110,111 et 112,113 pourront être de type à crabots. Selon un aspect particulier de l'invention, au moins les éléments d'accouplement 112,113 liant le plateau 106 à l'arbre de sortie 101 sont choisis du type à glissement, ce qui permet de limiter le couple transmis par lesdits éléments d'accouplement.

Ceci est spécialement intéressant pour éviter, en cas de dépassement de la zone de déformation utile du ressort spiral, que le raidissement du ressort spiral consécutif à ce dépassement n'induise un effort trop important sur la pile de disques.

Dans ce cadre, les éléments d'accouplement pourront par exemple être constitués par des disques de friction, ou encore par des dentures faciales de pente suffisamment faible pour permettre un glissement du plateau lorsque le ressort impose un couple résistant supérieur à un seuil déterminé par la géométrie des dents.

Selon un deuxième mode de réalisation illustré à la figure 4, le dispositif de parc 200, toujours réalisé comme un module unitaire rapporté de façon détachée sur l'actionneur 10, comporte un boîtier 203 dans lequel un arbre de sortie 201 munie d'un pignon de sortie 202 est monté pour tourner.

Un ressort spiral 204 est monté dans le boîtier et comporte une extrémité extérieure fixée sur le boîtier 203 et une extrémité intérieure solidaire d'un moyeu 205 monté à rotation coaxialement à l'arbre de sortie 201.

Le sélecteur comporte un premier plateau 206a qui coulisse dans le boîtier 203 tout en étant immobile en rotation vis à vis dudit boîtier.

Ce plateau 206a est mobile entre deux positions axiales, sous l'effet d'un premier électroaimant 209a à l'encontre d'un ressort 207.

Le premier plateau 206a porte des éléments d'accouplement 210 qui sont destinés à coopérer, lorsque le plateau 206a est dans une position axiale de couplage, avec des éléments d'accouplement homologues portés par le boîtier 203 (comme cela est illustré). Dans l'autre des positions axiales, les éléments d'accouplement sont séparés.

Le sélecteur comporte en outre un second plateau 206b qui est solidaire en rotation du moyeu 205 et qui peut coulisser axialement vis à vis de celui-ci.

Ce second plateau 206b est mobile entre deux positions axiales sous l'effet d'un second électroaimant 209b, à l'encontre d'un ressort 208.

Le deuxième plateau 206b porte des éléments d'accouplement 212 qui sont destinés à coopérer, lorsque le second plateau 206b est dans une position axiale de couplage, avec des éléments d'accouplement homologues 213 portés par l'arbre de sortie 201 (comme cela est illustré ici). Dans l'autre des positions, les éléments d'accouplement sont séparés.

Le fonctionnement du dispositif de parc précité est le suivant.

Lorsque le véhicule est en mode normal de freinage, le premier plateau 206a est placé dans la position de couplage, tandis que le deuxième plateau 206b est dans la position de désaccouplage.

De la sorte, l'arbre de sortie 201 n'est pas soumis à l'influence du ressort spiral 204, tandis que ledit ressort est maintenu dans un état déformé.

Lorsque le véhicule est en mode de parking, le premier plateau 206a est placé dans la position de désaccouplage, alors que le second plateau 206b est placé dans la position de couplage.

De la sorte, l'arbre de sortie est relié au ressort spiral 204, celui-ci étant libre de s'enrouler ou de se dérouler en réponse au mouvement du poussoir 16.

Il est possible de mettre en oeuvre un mode de réglage du couple de précontrainte du ressort spiral 204, en plaçant les deux plateaux 206a, 206b dans les positions ci-dessus décrites alors que le poussoir n'est pas en contact avec la pile de disques. Le ressort spiral 204 peut ainsi se dérouler ou être enroulé par le moteur électrique 15.

On peut également mettre en oeuvre un mode de verrouillage de l'actionneur, en plaçant les deux plateaux 206a et 206b dans la position de couplage.

De la sorte, le moyeu 205 est immobilisé, ce qui immobilise l'arbre de sortie 201, et partant l'ensemble de l'actionneur.

Les électroaimants 209a et 209b sont de type bistable, de sorte que les deux positions axiales extrêmes de chacun des plateaux 206a, 206b sont des positions stables. Il suffit alors d'une impulsion électrique fournie à l'électroaimant concerné pour déplacer un plateau d'une position axiale à l'autre.

Les éléments d'accouplement 212, 213 pourront être choisis du type à glissement pour protéger la pile de disques si le ressort spiral 204 est amené à travailler hors de sa zone utile de déformation.

L'invention n'est pas limitée aux modes particuliers de réalisation qui viennent d'être décrits, mais bien au contraire englobe toute variante entrant dans le cadre défini par les revendications.

En particulier, bien que dans les exemples de réalisation illustrés, chaque actionneur soit équipé d'un dispositif de parc, on pourra, dans le cadre de l'invention, n'équiper qu'une partie des actionneurs d'un dispositif de parc.

Bien que dans les exemples de réalisation illustrés, chaque dispositif de parc soit associé à un seul actionneur, on pourra prévoir des dispositifs de parc coopérant avec plusieurs actionneurs.

Bien que dans les exemples illustrés, le dispositif de parc soit un module unitaire rapporté de façon détachable sur l'actionneur, le dispositif de parc pourra être intégré à l'actionneur.

Bien que dans les exemples illustrés, l'organe élastique soit un ressort spiral, l'invention englobe également des dispositifs de parc dont l'organe élastique comporterait un ressort hélicoïdal, une lame flexible, ou tout autre élément mécanique susceptible d'emmagasiner de l'énergie potentielle élastique.

Bien que dans les exemples illustrés, le sélecteur comprenne un ou plusieurs plateaux déplaçables axialement sous l'effet de ressorts ou d'électroaimants, tout autre type de sélecteur sera envisageable, qu'il soit à commande électrique, mécanique, ou autre.

## Revendications

1. Frein électromécanique comprenant une pile de disques et au moins un actionneur électromécanique (10) ayant un poussoir (16) pour appliquer de façon commandée une pression sur la pile de disques, le frein étant équipé d'un dispositif de parc (100;200) pour maintenir une pression sur les disques au moins lorsque le frein n'est pas alimenté en courant électrique, **caractérisé en ce que** le dispositif de parc comprend un organe élastique (104;204) et un sélecteur (106; 206a,206b) qui est mobile entre une première position dans laquelle l'organe élastique (104;204) est mécaniquement découplé du poussoir (16) et est maintenu dans un état élastiquement déformé pour former une réserve d'énergie potentielle, et une deuxième position dans laquelle l'organe élastique (104;204) est mécaniquement couplé au poussoir (16) de façon que le poussoir (16) exerce une pression contre la pile de disques sous l'action de l'organe élastique (104;204).

2. Frein électromécanique selon la revendication 1, **caractérisé en ce que** l'organe élastique est un ressort spiral (104;204).

3. Frein électromécanique selon la revendication 2, **caractérisé en ce que** le ressort spiral (104;204) a une extrémité fixe et une extrémité solidaire d'un moyeu (105;205) tournant coaxialement à un arbre de sortie (101;201) du dispositif de parc.

4. Frein électromécanique selon la revendication 3, **caractérisé en ce que** le sélecteur comprend un plateau (106) mobile en rotation avec le moyeu (105) et déplaçable axialement entre la première position dans laquelle des éléments d'accouplement (110) du plateau (106) coopèrent avec des éléments d'accouplement (111) homologues fixes, et la deuxième position dans laquelle des éléments d'accouplement (112) du plateau (106) coopèrent avec des éléments d'accouplement (113) homologues portés par l'arbre de sortie (101).

5. Frein électromécanique selon la revendication 4, **caractérisé en ce que** le plateau (106) est apte à être placé dans une position axiale intermédiaire dans laquelle les éléments d'accouplement (110,112) portés par le plateau (106) sont tous deux en prise avec les éléments d'accouplement (111,113) homologues respectifs.

6. Frein électromécanique selon la revendication 3, **caractérisé en ce que** le sélecteur comprend un premier plateau (206a) qui est déplaçable axialement entre une position de couplage dans laquelle des éléments d'accouplement (210) du premier plateau (206a) coopèrent avec des éléments d'accouplement (211) homologues portés par le moyeu (205) et une position de désaccouplage dans laquelle lesdits éléments d'accouplement (210,211) sont dégagés, ledit sélecteur comprenant en outre un second plateau (206b) solidaire en rotation du moyeu (205) et déplaçable entre une position de couplage dans laquelle des éléments d'accouplement (212) du second plateau (206b) coopèrent avec des éléments d'accouplement (213) portés par l'arbre de sortie (201), et une position de désaccouplage dans laquelle lesdits éléments d'accouplement (212,213) sont dégagés.

7. Frein électromécanique selon l'une des revendications 4 ou 6, **caractérisé en ce que** au moins l'un des couples d'éléments d'accouplement (110,111, 112,113 ; 210,211, 212,213) est du type à crabot.

8. Frein électromécanique selon l'une des revendications 4 ou 6, **caractérisé en ce que** au moins l'un des couples d'éléments d'accouplement (110,111, 112,113 ; 210,211, 212,213) est du type à glissement.

9. Frein électromécanique selon l'une des revendications précédentes, **caractérisé en ce que** le dispositif de parc (100 ;200) est un module unitaire logé dans un boîtier (103 ;203) rapporté de façon détachable sur l'actionneur.

## Patentansprüche

1. Elektromechanische Bremse, umfassend einen Stapel Scheiben und mindestens ein elektromechanisches Betätigungselement (10), das einen Stößel (16) hat, um auf gesteuerte Weise einen Druck auf den Stapel Scheiben auszuüben, wobei die Bremse mit einer Parkvorrichtung (100; 200) versehen ist, um einen Druck auf die Scheiben aufrechtzuerhalten, zumindest wenn die Bremse nicht mit elektrischem Strom versorgt wird, **dadurch gekennzeichnet, dass** die Parkvorrichtung ein elastisches Element (104; 204) und einen Wahlschalter (106; 206a, 206b) umfasst, der zwischen einer ersten Position, in der das elastische Element (104; 204) mechanisch vom Stößel (16) entkoppelt ist und in einem elastisch verformten Zustand gehalten wird, um einen potentiellen Energiespeicher zu bilden, sowie einer zweiten Position beweglich ist, in der das elastische Element (104; 204) mechanisch an den Stößel (16) gekoppelt ist, derart, dass der Stößel (16) unter der Wirkung des elastischen Elements (104; 204) einen Druck auf den Stapel Scheiben ausübt.

2. Elektromechanische Bremse nach Anspruch 1, **dadurch gekennzeichnet, dass** das elastische Element eine Spiralfeder (104; 204) ist.

3. Elektromechanische Bremse nach Anspruch 2, **dadurch gekennzeichnet, dass** die Spiralfeder (104; 204) ein ortsfestes Ende und ein fest mit einer Nabe (105; 205) verbundenes Ende hat, die sich koaxial zu einer Abtriebswelle (101; 201) der Parkvorrichtung dreht.

4. Elektromechanische Bremse nach Anspruch 3, **dadurch gekennzeichnet, dass** der Wahlschalter eine drehfest mit der Nabe (105) verbundene Platte (106) umfasst, die zwischen der ersten Position, in der Kupplungselemente (110) der Platte (106) mit ortsfesten, homologen Kupplungselementen (111) zusammenwirken, und der zweiten Position axial verschoben werden kann, in der Kupplungselemente (112) der Platte (106) mit homologen Kupplungselementen (113) zusammenwirken, die von der Abtriebswelle (101) getragen werden.

5. Elektromechanische Bremse nach Anspruch 4, **dadurch gekennzeichnet,**
**dass** die Platte (106) dazu geeignet ist, in eine mittlere axiale Position gebracht zu werden, in der die von der Platte (106) getragenen Kupplungselemente (110, 112) alle beide in Eingriff mit den jeweiligen homologen Kupplungselementen (111, 113) stehen.

6. Elektromechanische Bremse nach Anspruch 3, **dadurch gekennzeichnet, dass** der Wahlschalter eine erste Platte (206a) umfasst, die zwischen einer Kupplungsposition, in der die Kupplungselemente (210) der ersten Platte (206a) mit homologen, von der Nabe (205) getragenen Kupplungselementen (211) zusammenwirken, und einer Entkupplungsposition axial verschiebbar ist, in der die Kupplungselemente (210, 211) ausgerückt sind, wobei der Wahlschalter ferner eine zweite Platte (206b) umfasst, die drehfest mit der Nabe (205) verbunden ist und zwischen einer Kupplungsposition, in der die Kupplungselemente (212) der zweiten Platte (206b) mit von der Abtriebswelle (201) getragenen Kupplungselementen (213) zusammenwirken, und einer Entkupplungsposition verschoben werden kann, in der die Kupplungselemente (212, 213) ausgerückt sind.

7. Elektromechanische Bremse nach einem der Ansprüche 4 oder 6, **dadurch gekennzeichnet, dass** mindestens eines der Paare von Kupplungselementen (110, 111, 112, 113; 210, 211, 212, 213) vom Typ Klauenkupplung ist.

8. Elektromechanische Bremse nach einem der Ansprüche 4 oder 6, **dadurch gekennzeichnet, dass** mindestens eines der Paare von Kupplungselementen (110, 111, 112, 113; 210, 211, 212, 213) vom Typ Rutschkupplung ist.

9. Elektromechanische Bremse nach einem der vorhergehenden Ansprüche, **dadurch gekennzeichnet, dass** die Parkvorrichtung (100; 200) ein Einheitsmodul ist, das in einem Gehäuse (103; 203) untergebracht ist, das auf abnehmbare Weise am Betätigungselement angebracht ist.

## Claims

1. An electromechanical brake comprising a stack of disks and at least one electromechanical actuator (10) having a pusher (16) for applying pressure to the stack of disks in controlled manner, the brake being equipped with a parking device (100; 200) for maintaining pressure on the disks at least while the brake is not fed with electrical current, said electromechanical brake being **characterized in that** the parking device comprises a resilient member (104; 204) and a selector (106; 206a, 206b) which is mounted to move between a first position in which the resilient member (104; 204) is mechanically decoupled from the pusher (16) and is maintained in an elastically deformed state to form a potential energy reserve, and a second position in which the resilient member (104; 204) is mechanically coupled to the pusher (16) so that the pusher (16) exerts pressure on the stack of disks under drive from the resilient member (104; 204).

2. An electromechanical brake according to claim 1, **characterized in that** the resilient member is a spiral spring (104; 204).

3. An electromechanical brake according to claim 2, **characterized in that** the spiral spring (104; 204) has one end fixed, and its other end constrained to rotate with a hub (105; 205) that turns about an axis that coincides with the axis of the outlet shaft (101; 201) of the parking device.

4. An electromechanical brake according to claim 3, **characterized in that** the selector comprises a plate (106) that is mounted to rotate with the hub (105) and to be movable axially between the first position in which coupling elements (110) on the plate (106) co-operate with corresponding fixed coupling elements (111), and the second position in which coupling elements (112) on the plate (106) co-operate with corresponding coupling elements (113) carried by the outlet shaft (101).

5. An electromechanical brake according to claim 4, **characterized in that** the plate (106) is suitable for being placed in an intermediate axial position in which both of the coupling elements (110, 112) carried by the plate (106) are in engagement with the respective corresponding coupling elements (111, 113).

6. An electromechanical brake according to claim 3, **characterized in that** the selector comprises a first plate (206a) which is movable axially between a coupling position in which coupling elements (210) on the first plate (206a) co-operate with corresponding coupling elements (211) carried by the hub (205), and a decoupling position in which said coupling elements (210, 211) are disengaged, said selector further comprising a second plate (206b) constrained to rotate with the hub (205) and movable between a coupling position in which coupling elements (212) on the second plate (206b) co-operate with coupling elements (213) carried by the outlet shaft (201), and a decoupling position in which said coupling elements (212, 213) are disengaged.

7. An electromechanical brake according to claim 4 or claim 6, **characterized in that** at least one of the pairs of coupling elements (110 & 111, 112 & 113; 210 & 211, and 212 & 213) is of the positive clutch type.

8. An electromechanical brake according to claim 4 or claim 6, **characterized in that** at least one of the pairs of coupling elements (110 & 111, 112 & 113, 210 & 211, and 212 & 213) is of the sliding type.

9. An electromechanical brake according to any preceding claim, **characterized in that** the parking device (100; 200) is a single module housed in a housing (103; 203) mounted detachably on the actuator.
